# DEMANDE DE BREVET EUROPEEN

(11) **EP 3 621 064 A1**
(43) Date de publication de la demande: **11.03.2020**
(21) Numéro de dépôt: 18306163.9
(22) Date de dépôt: 04.09.2018
(51) Int. Cl.: G10K 11/16, H04M 1/19, E04B 1/82

(54) **BOÎTIER D'ISOLATION PHONIQUE POUR ENCEINTE INTELLIGENTE**

(71) Demandeur: Gautier Investissements Prives, 33000 Bordeaux (FR)
(72) Inventeur: GAUTIER, Fabrice, 33000 BORDEAUX (FR)
(74) Mandataire: Ipside

(57) **Abrégé**

L'invention concerne boîtier (100) comportant un volume intérieur (10) acoustiquement isolé, dans lequel une enceinte intelligente (200) à commande vocale peut être placée, au moins un microphone externe (61) et un haut-parleur interne (63) combinés, et au moins un microphone interne (71) et un haut-parleur externe (73) combinés, le microphone et le haut-parleur externes étant situés à l'extérieur du volume intérieur, et le microphone et le haut-parleur internes étant situés à l'intérieur du volume intérieur. Le boîtier a pour but d'empêcher l'enceinte intelligente de capter tout signal vocal qui n'est pas précédé d'une expression d'activation déterminée.

## Description

### DOMAINE TECHNIQUE

La présente invention appartient au domaine des technologies de contrôle vocal. Elle concerne plus particulièrement les assistants personnels intelligents (également appelés assistants virtuels ; *virtual assistants* en terminologie anglo-saxonne), et plus particulièrement encore, un boîtier d'isolation phonique sélective dans lequel une enceinte intelligente à commande vocale peut être placée de sorte qu'elle ne reçoive que des instructions vocales précédées d'une expression ou d'un mot-clé d'activation.

### ÉTAT DE L'ART

Une enceinte connectée dite « intelligente » est un dispositif équipé d'un haut-parleur et d'un microphone combinés qui intègre un assistant vocal (agent logiciel). Grâce à cet équipement, l'enceinte est capable d'interagir avec l'utilisateur pour lui délivrer un service suite à une requête vocale. L'assistant est en mesure de répondre à une question, donner la météo, régler le chauffage, activer des lumières, réserver un taxi, acheter des billets de voyage, etc.

Certaines sociétés ont développé des enceintes connectées intégrant des assistants personnels intelligents. Par exemple, Apple Inc. a développé *Siri* (marque déposée) pour permettre à ses utilisateurs de communiquer verbalement avec leur smartphones iPhone (marque déposée) ; Amazon.com Inc. a développé *Alexa* (marque déposée) qui permet à ses utilisateurs de chercher sur le Web et de commander des produits sur Amazon (marque déposée) ; Google LLC. a développé *Google Assistant*.

Le principe général de fonctionnement se caractérise par quatre grandes étapes :
- L'utilisateur « réveille » l'enceinte lorsqu'il prononce une expression clé (« OK Google », « Alexa », etc.) ;
- L'utilisateur énonce sa requête ;
- Les paroles prononcées sont automatiquement interprétées puis analysées afin qu'une réponse adaptée soit fournie ;
- L'enceinte repasse en mode « veille ».

Certaines de ces enceintes enregistrent localement les requêtes de l'utilisateur de manière à lui laisser la maîtrise de ses données. D'autres en revanche, envoient ces requêtes dans le « cloud », autrement dit sur les serveurs de traitement de la société qui commercialise l'enceinte.

De plus, avec ses microphones intégrés, l'enceinte intelligente « entend » tout en permanence. Il est impossible de désactiver cette fonctionnalité tout en utilisant l'enceinte intelligente.

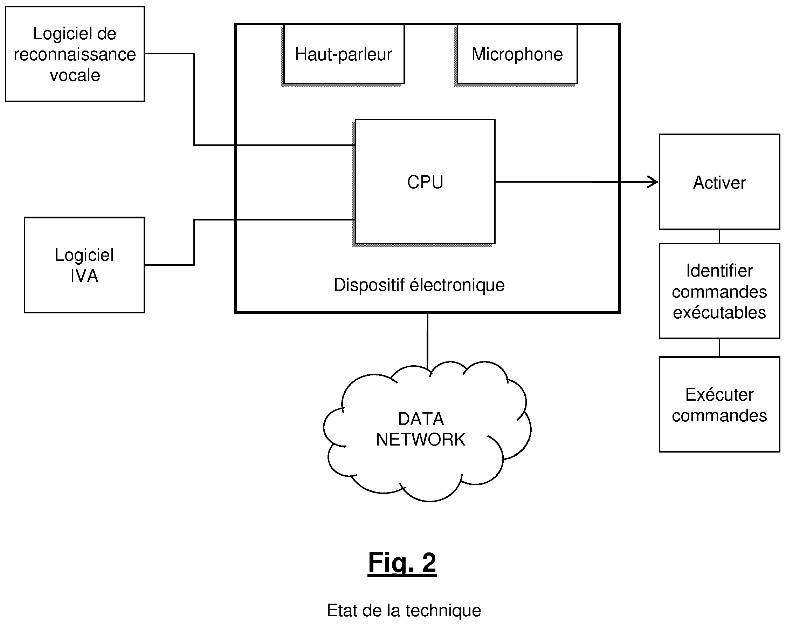

En se référant à la figure 2, qui représente un schéma de principe simplifié d'une majorité d'assistants virtuels intelligents, il peut être constaté qu'un système IVA (pour *Intelligent Virtual Assistant)* comprend un logiciel IVA mis en oeuvre par un calculateur central embarqué dans un dispositif électronique de type *Amazon Echo* (enceinte intelligente). Le calculateur central communique avec un réseau de données, tel qu'un réseau de données cellulaire ou le Web. Cela permet au logiciel IVA de retrouver une information en réponse à une requête spéciale. Les opérations du logiciel IVA nécessitent que le dispositif électronique soit équipé d'un microphone et d'un haut-parleur pour la réception et la transmission de signaux sonores. Lorsque ce système est en service, les mots prononcés par un utilisateur se trouvant à proximité sont en permanence captés par le microphone et interprétés au moyen d'un logiciel de reconnaissance vocale qui est également mis en oeuvre par le calculateur central du dispositif électronique. Le signal vocal interprété est ensuite analysé pour détecter si un mot-clé ou une expression d'activation a été prononcé. Usuellement, l'expression d'activation correspond au nom du système IVA, tel que *Alexa*, *Siri*, ou autres. Fonctionnellement, dès que le système IVA détecte un signal vocal, le logiciel IVA tente d'identifier une commande exécutable, voir figure 2. Différents sous-programmes implémentés dans le logiciel IVA sont dédiés à différentes commandes exécutables. De ce fait, lorsqu'une commande exécutable est identifiée, ou ses paramètres déclenchés, le sous-programme correspondant à cette commande exécutable est exécuté.

Ainsi, une enceinte intelligente d'un système IVA dans un état opérationnel « écoute » en permanence son environnement pour détecter tout signal vocal susceptible de correspondre à une commande vocale. Cette « écoute » permanente des systèmes IVA a suscité de nombreuses polémiques concernant la protection de la vie privée des utilisateurs, et surtout leur espionnage commercial, autrement dit la collecte par les systèmes IVA d'informations à caractère commercial contenues dans les discussions des utilisateurs afin de leur proposer des publicités ciblées et personnalisées.

Pour arrêter l'écoute permanente d'une enceinte intelligente, telle que *Amazon Echo*, une solution possible est d'éteindre l'enceinte. Cependant, cette solution n'est pas toujours commode. Il peut arriver qu'un utilisateur ait besoin de laisser son enceinte allumée et au même moment ne pas vouloir prendre le risque d'être écouté. Par exemple, lorsqu'il souhaite engager une conversation privée, ou simplement discuter autour d'un repas, en écoutant de la musique avec l'enceinte intelligente.

Les fabricants d'enceintes intelligentes ont prévu à cet effet un bouton qui a pour seules fonctions de désactiver et de réactiver le microphone de l'enceinte, le microphone étant par défaut activé au démarrage de l'enceinte intelligente. La désactivation du (ou des) microphone(s) de l'enceinte a pour effet de la mettre dans un état passif non réceptif de commandes vocales.

Le problème majeur subsistant avec cette solution est le fait qu'il faille à l'utilisateur se déplacer à chaque fois qu'il souhaite activer ou désactiver le microphone de son enceinte intelligente. Cela va à l'encontre de l'esprit des enceintes intelligentes, qui se veulent extrêmement simples d'accès et commandables à distance (voire à grande distance, la portée des microphones de *Amazon Echo* par exemple peut atteindre des dizaines de mètres). Une solution optimisée pourrait être envisagée et consisterait à désactiver le microphone par une simple commande vocale du type « Alexa, désactive ton microphone » sans avoir besoin d'atteindre physiquement le bouton prévu à cet effet. Toutefois, il serait impossible de réaliser l'opération inverse, à savoir réactiver le microphone de l'enceinte par commande vocale, aucune commande vocale ne peut être exécutée tant que le microphone est désactivé. Une activation manuelle du microphone devient alors inévitable.

A ce jour, aucune solution n'existe pour permettre une utilisation sécurisée des enceintes intelligentes et de leurs systèmes IVA, sans risque d'atteinte à la vie privée des individus, en les empêchant d'accéder à des informations sortant du cadre des commandes vocales qui leurs sont destinées, et d'« écouter » toute conversation qui n'est pas une commande vocale (précédée du mot ou de l'expression d'activation).

### PRÉSENTATION DE L'INVENTION

La présente invention cherche à résoudre le problème d'utilisation sécurisée et confidentielle des enceintes intelligentes à commande vocales.

À cet effet, la présente invention concerne un boîtier comportant un volume intérieur acoustiquement isolé, dans lequel une enceinte intelligente à commande vocale peut être placée, et comportant au moins un microphone externe et un haut-parleur interne combinés, et au moins un microphone interne et un haut-parleur externe combinés, lesdits microphone et haut-parleur externes étant situés à l'extérieur du volume intérieur et lesdits microphone et haut-parleur internes étant situés à l'intérieur du volume intérieur.

De façon avantageuse, le boîtier comporte en outre un couvercle permettant l'accès au volume intérieur, ledit couvercle étant acoustiquement isolant.

Dans un mode de réalisation, le boîtier comporte une unité de traitement d'entrée reliant le microphone externe au haut-parleur interne et implémentant un algorithme de détection de mots de sorte que seules des commandes vocales captées par ledit microphone externe et précédées d'une expression d'activation déterminée sont transmises audit haut-parleur interne.

En outre, le boîtier comporte une unité de traitement de sortie reliant le microphone interne au haut-parleur externe et permettant de réaliser un traitement numérique du signal.

Avantageusement, le boîtier comporte une diode électroluminescente changeant d'intensité lumineuse et ou de couleur en fonction de la détection de voix par le microphone externe.

Dans un mode de réalisation avantageux le boîtier comporte une batterie électrique rechargeable et un circuit de gestion de l'alimentation.

En outre, le boîtier comporte en outre une unité de traitement centralisée, une puce Bluetooth et une mémoire.

Avantageusement, le boîtier comporte un bouton marche-arrêt et des boutons de réglage du volume sonore du haut-parleur externe.

Plus particulièrement, le volume intérieur du boîtier est phoniquement isolé.

Par exemple, le boîtier présente une forme globalement cylindrique à base circulaire et le volume intérieur est délimité par une paroi latérale acoustiquement isolante et un fond acoustiquement isolant.

Dans un mode de réalisation, le boîtier comporte un volume utile contenu dans le volume intérieur et dans lequel sont placés le microphone et le haut-parleur internes.

De façon avantageuse, le boîtier comporte une base dans laquelle sont placés le microphone et le haut-parleur externes.

Plus particulièrement, la base comporte au moins une entrée microphone et au moins une sortie haut-parleur.

Dans un mode de réalisation, le boîtier comporte un réseau de microphones externes, ledit réseau comprenant au moins trois microphones.

Le boîtier selon l'invention comporte en outre un moyen de visualisation et de contrôle de type écran.

Les concepts fondamentaux de l'invention venant d'être exposés ci-dessus, d'autres détails et caractéristiques ressortiront plus clairement à la lecture de la description qui suit et en regard des dessins annexés, donnant à titre d'exemple non limitatif un mode de réalisation d'un boîtier d'isolation phonique conforme aux principes de l'invention.

### BRÈVE DESCRIPTION DES FIGURES

Les différentes figures ainsi que les éléments d'une même figure ne sont pas nécessairement représentés à la même échelle. Sur l'ensemble des figures, les éléments identiques ou équivalents portent le même repère numérique.

Il est ainsi illustré en :
- Figure 1 : une vue en perspective d'un boîtier d'isolation phonique selon l'invention laissant transparaitre une enceinte intelligente placée dans ledit boîtier ;
- Figure 2 : un schéma simplifié du principe des enceintes intelligentes existantes ;
- Figure 3 : un diagramme bloc schématique illustrant le principe de fonctionnement du boîtier d'isolation phonique selon l'invention ;
- Figure 4 : une architecture schématique du boîtier d'isolation phonique selon l'invention ;
- Figure 5 : un diagramme bloc du fonctionnement global du boîtier d'isolation phonique et d'une enceinte intelligente placée dans ledit boîtier ;
- Figure 6 : diagramme bloc détaillé d'une unité de traitement d'entrée selon l'invention.

### DESCRIPTION DÉTAILLÉE DE MODES DE RÉALISATION

Dans le mode de réalisation décrit ci après, on fait référence à un boîtier d'isolation phonique destiné principalement aux enceintes intelligentes à commande vocale. Cet exemple est donné pour une meilleure compréhension de l'invention et n'exclut pas son application dans d'autres domaines, pour permettre par exemple l'isolation phonique des assistants virtuels intelligents embarqués dans certaines voitures.

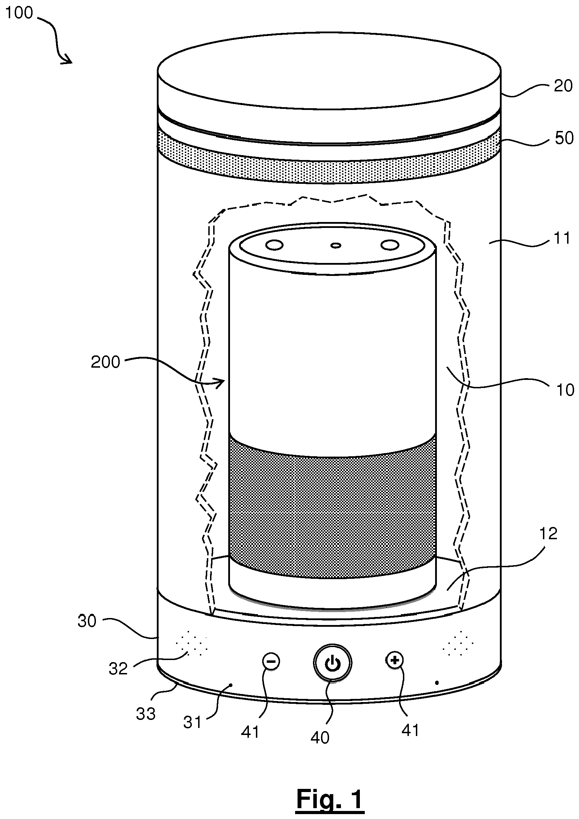

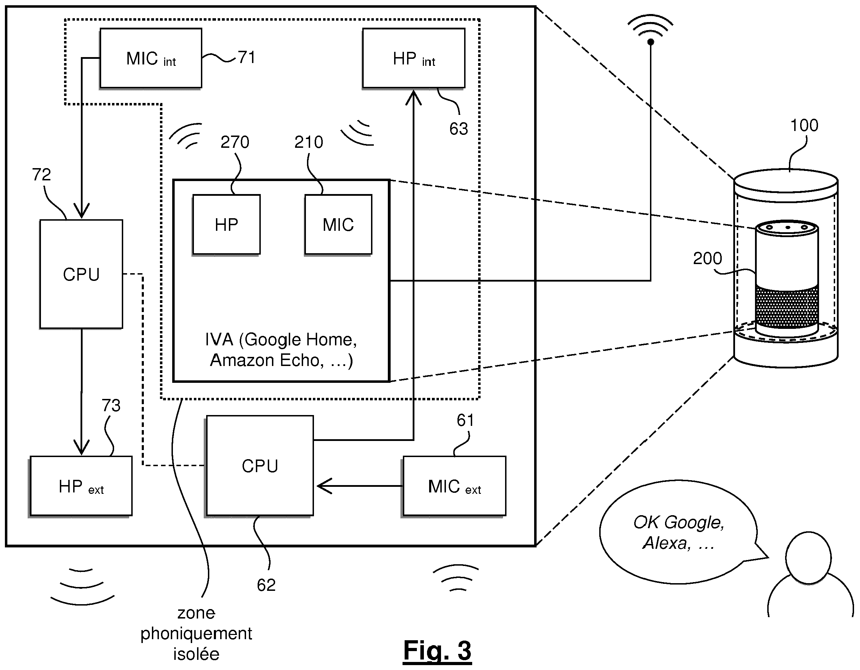

Dans une première partie, le boîtier d'isolation phonique objet de l'invention est décrit du point de vue d'un utilisateur final en présentant un exemple de structure et d'interface, en référence à la figure 1, avec lesquelles l'utilisateur interagit. Dans une seconde partie, le boîtier d'isolation phonique est décrit du point de vue de la conception électronique en présentant son fonctionnement général, son architecture et ses principaux composants, en référence aux figures 3 à 6.

La figure 1 représente un boîtier d'isolation phonique 100 dans lequel est placée une enceinte intelligente 200, telle que l'enceinte *Amazon Echo* (marque déposée). Le boîtier 100 isole phoniquement l'enceinte intelligente 200 de sorte qu'elle ne reçoive que des commandes vocales précédées du mot ou de l'expression d'activation de l'enceinte intelligente, « Alexa » par exemple. Aucun autre signal sonore ne peut être reçu par l'enceinte intelligente. De ce fait, l'enceinte intelligente est conditionnée pour assurer uniquement sa fonction de base, à savoir répondre à des commandes volontaires qui lui sont destinées, sans pouvoir accéder au moindre contenu qui constituerait une infraction à la vie privée des utilisateurs. Le boîtier 100 permet de sélectionner les commandes vocales adressées à l'enceinte intelligente et de les transmettre à ladite enceinte, pour ensuite transmettre en retour les réponses de l'enceinte à l'utilisateur.

Le boîtier d'isolation phonique 100, selon l'exemple illustré, présente une forme cylindrique à base circulaire et des dimensions adaptées lui permettant de renfermer différentes enceintes intelligentes disponibles sur le marché. La forme globalement cylindrique du boîtier 100 offre un compromis entre une intégration compacte de ses composants, une qualité sonore améliorée et multidirectionnelle et une tenue mécanique suffisante. Le boîtier 100 présente un volume intérieur 10 destiné à recevoir l'enceinte intelligente 200 et délimité par une paroi latérale 11 et un fond 12 sur lequel se pose ladite enceinte. L'accès au volume intérieur 10 du boîtier 100 se fait par une ouverture, au niveau du bord supérieur de la paroi latérale 11, qui se ferme avec un couvercle 20. Grâce à des propriétés insonorisantes de la paroi latérale 11, du fond 12 et du couvercle 20, ainsi qu'à l'étanchéité de la fermeture assurée par ledit couvercle, le volume intérieur 10 du boîtier 100 est phoniquement isolé de l'environnement extérieur, et par conséquent, l'enceinte intelligente 200 qui s'y trouve ne peut être atteinte, sans artifices, par des sons provenant de sources extérieures.

Le boîtier d'isolation phonique 100 comporte en outre une base 30, réunissant une majorité de composants comme décrit dans la suite de la description et comportant principalement des entrées microphone 31 et des sorties haut-parleur 32, des boutons de contrôle 40 et 41, ainsi qu'un anneau lumineux 50.

La paroi latérale 11 et le fond 12 délimitant le volume intérieur 10 du boîtier 100 sont formés dans un matériau phoniquement isolant, adapté à une bande de fréquences restreinte plus spécifiquement au spectre sonore de la voix humaine et plus largement à celui des bruits domestiques. Le choix peut être porté sur un matériau acoustiquement isolant, bloquant plus de bruits, cependant pour des raisons de densité et donc de masse un isolant phonique est préféré. Pour la mise en oeuvre de l'invention, l'isolation phonique est suffisante.

L'homme du métier dispose des connaissances générales pour choisir des matériaux adaptés généralement denses et fortement amortisseurs des ondes acoustiques.

Par exemple, la paroi latérale 11 et le fond 12 sont constitués d'une structure stratifiée, d'un matériau composite vitré, d'un verre feuilleté, etc. La multiplication des couches dans le matériau d'isolation permet d'améliorer les propriétés d'absorption des ondes sonores.

De préférence, la paroi latérale 11 est opaque.

Toutefois, la paroi latérale 11 peut être une paroi transparente en méthacrylate ou polyméthacrylate, laissant entrevoir l'enceinte intelligente 200 placée à l'intérieur du boîtier 100.

Dans une même logique, le couvercle 20 du boîtier 100 contient au moins une couche d'isolation phonique, constituée d'un matériau parmi les matériaux précités, disposée de sorte à assurer une isolation phonique du volume intérieur 10 lorsque le couvercle 20 ferme le boîtier 100.

La base 30 est l'élément qui permet les principales interactions de l'utilisateur avec le boîtier d'isolation phonique 100, plus spécialement les communications sonores entre le boîtier et son environnement extérieur. Outre les composants électroniques qui sont décrit ci-après, la base 30 selon l'exemple illustré comporte les entrées microphone 31 et les sorties haut-parleur 32, et peut être munie d'une membrane antidérapante 33 faisant interface entre le boîtier 100 et tout support sur lequel repose ledit boîtier.

De plus, la base 30 est conformée pour recevoir les boutons de contrôle 40 et 41. Selon l'exemple illustré, ces boutons comprennent un bouton marche/arrêt 40 et deux boutons de réglage du volume sonore 41.

L'anneau lumineux 50, selon l'exemple illustré, est de type diode électroluminescente (LED), s'allumant pour signaler à l'utilisateur que le boîtier est en état de fonctionnement et changeant de couleur et d'intensité lumineuse en fonction de conditions extérieures telles que la présence et la direction de la voix.

Dans un mode de réalisation alternatif, l'anneau lumineux peut être remplacé par un écran de contrôle, de préférence tactile, ou tout autre moyen de visualisation.

La figure 3 représente, selon un diagramme bloc simplifié, le principe de fonctionnement du boîtier d'isolation phonique 100. L'enceinte intelligente 200 (de type *Amazon Echo*, *Google Home*, etc.) est isolée phoniquement de l'environnement extérieur en étant placée à l'intérieur du boîtier 100, ladite enceinte étant allumée et connectée à un réseau sans fil, Wi-Fi par exemple, pour pouvoir fonctionner normalement. Les parois phoniquement isolantes du boîtier 100 restent parfaitement perméables aux ondes électromagnétiques des réseaux sans fil.

Ainsi, lorsqu'un utilisateur énonce une requête vocale précédée d'une expression d'activation (*OK Google*, *Alexa*, etc.), celle-ci est captée par un microphone externe 61, le signal sonore capté est ensuite traité dans une unité de traitement d'entrée 62 pour identifier ladite expression, si cette expression d'activation est identifiée, le signal traité est transmis à un haut-parleur interne 63. Le haut-parleur interne 63 reproduit alors la requête vocale de l'utilisateur à l'intérieur du boîtier 100, l'enceinte 200 reçoit ladite requête par le biais de son microphone 210 et apporte une réponse vocale émise par son haut-parleur 270. Cette réponse vocale de l'enceinte 200 est captée par un microphone interne 71 du boîtier 100, traitée dans une unité de traitement de sortie 72 de type DMP (Digital Media Processor) ou DSP (Digital Signal Processor), comprenant un amplificateur, et transmise à un haut-parleur externe 73 qui diffuse la réponse vocale de l'enceinte 200 à l'extérieur du boîtier 100.

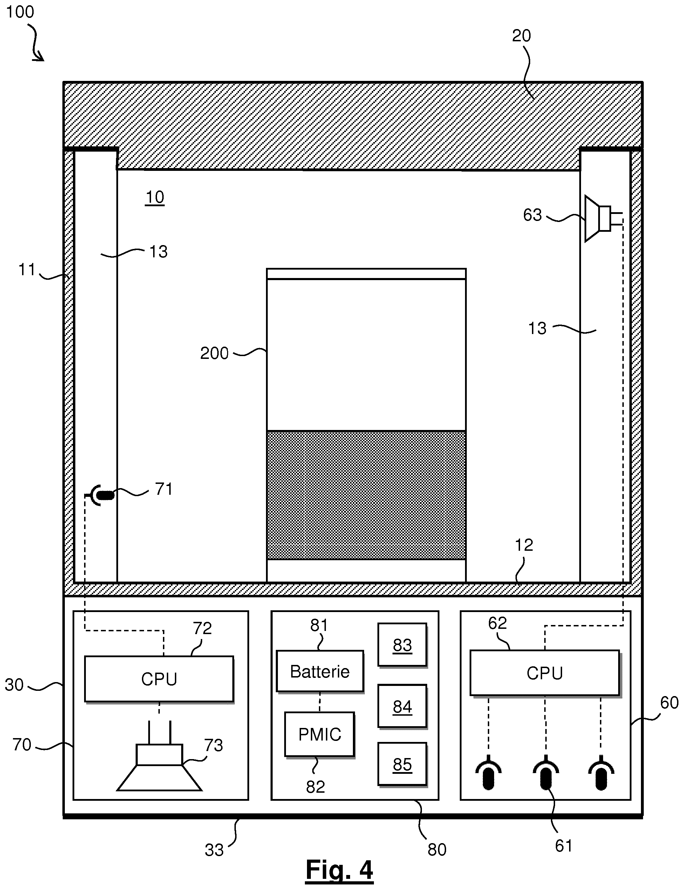

La figure 4 schématise un exemple d'architecture du boîtier d'isolation phonique 100 adaptée aux fonctions des principaux composants présentés ci-dessus.

L'enceinte intelligente 200 est placée dans le volume intérieur 10 qui est phoniquement isolé par la paroi latérale 11, le fond 12 et le couvercle 20, ces parties isolantes étant représentées en hachures sur la figure 4.

Les transducteurs internes, à savoir le haut-parleur interne 63 et le microphone 71, interagissent directement avec l'enceinte 200 et sont donc placés dans un volume utile 13 contenu dans le volume intérieur 10 et adjacent à la paroi latérale 11 phoniquement isolante. Ainsi, l'enceinte 200 peut à la fois capter le son provenant du haut-parleur interne 63 et atteindre le microphone interne 71.

Les transducteurs externes, à savoir le microphone externe 61 et le haut-parleur externe 73, sont quant à eux placés en dehors des parois phoniquement isolantes pour pouvoir interagir avec l'environnement extérieur du boîtier 100.

Dans l'exemple illustré, la base 30 contient trois principaux blocs fonctionnels, un bloc d'entrée 60 comportant un réseau de microphones externes 61 et l'unité de traitement d'entrée 62, un bloc de sortie 70 comportant l'unité de traitement de sortie 72 et le haut-parleur externe 73, et un bloc central 80 de servitudes comportant une batterie électrique 81, un circuit intégré de gestion de l'alimentation 82, ainsi que d'autres composants tels qu'une puce Bluetooth 83, une mémoire 84, un contrôleur de LED programmable 85, etc.

Le bloc d'entrée 60 est relié au haut-parleur interne 63, et le bloc de sortie 70 est relié au microphone interne 71. Le bloc central 80 est relié à l'ensemble des composants pour permettre, entre autres, une distribution centralisée de l'énergie électrique nécessaire aux différents composants. Les liaisons fonctionnelles entre le bloc central 80 et le reste des composants ne sont pas représentées pour une meilleure clarté de la figure 4. Les blocs d'entrée 60 et de sortie 70 peuvent également être reliés entre eux.

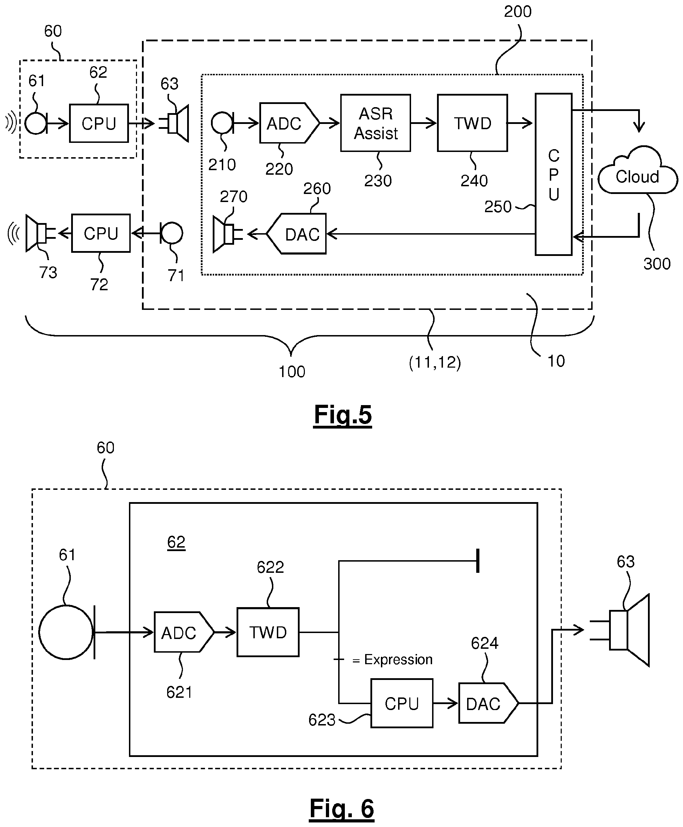

La figure 5 représente les différents composants permettant la réalisation de la fonction principale de l'invention.

En référence à cette même figure, le fonctionnement commence par la réception par le microphone externe 61 d'une commande vocale émise par l'utilisateur non représenté, cette commande vocale est analysée et traitée dans l'unité de traitement d'entrée 62, cette opération est décrite plus en détail à la figure 6. La commande vocale ne peut être transmise au haut-parleur interne 63 que si ladite commande vocale est précédée de l'expression d'activation de l'enceinte intelligente 200. Lorsque cette condition est vérifiée, le bloc d'entrée 60, situé en amont des parois phoniquement isolantes (11,12), transmet la commande vocale au haut-parleur interne 63, situé en aval desdites parois dans le volume intérieur 10 contenant l'enceinte 200. Le haut parleur interne 63 reproduit alors la commande vocale intégralement avec l'expression d'activation et déclenche l'enceinte 200. Le fonctionnement de l'enceinte 200 étant connu, il sera ici brièvement rappelé.

Le microphone 210 de l'enceinte capte la commande vocale qui est ensuite convertie en signal numérique par le biais d'un convertisseur analogique-numérique 220, le signal numérique brut obtenu est ensuite traité via des algorithmes d'amélioration 230. Des algorithmes de détection de mots 240 prennent ensuite le relais pour rechercher l'expression d'activation. Une unité de traitement centrale 250 tente alors d'exécuter la requête textuelle, correspondant à la commande vocale de base, qui lui parvient. Cette exécution peut être directe, dans le cas d'une tâche programmée, ou indirecte, auquel cas l'unité de traitement 250 interroge un cloud informatique 300 via une connexion à un réseau sans fil. La réponse est traitée dans l'unité de traitement 250 puis convertie en signal analogique dans un convertisseur numérique-analogique 260. Une réponse vocale correspondant à ce signal est alors émise par le haut-parleur 270 de l'enceinte 200.

Pour clore la boucle de fonctionnement du boîtier d'isolation phonique 100, le microphone interne 71 transmet la réponse vocale de l'enceinte 200 à l'unité de traitement de sortie 72 qui opère quelques corrections acoustiques avant de transmettre le signal au haut-parleur externe 73. Il n'est pas nécessaire d'effectuer des traitements anti réverbération dans l'unité de traitement 72 étant donné que les parois du boîtier 100 sont phoniquement isolantes.

La figure 6 schématise le fonctionnement du bloc d'entrée 60 du boîtier d'isolation phonique 100. Le microphone externe 61 transmet le signal vocal à un convertisseur analogique-numérique 621 de l'unité de traitement d'entrée 62. Le signal numérique obtenu est analysé avec des algorithmes de détection de mots 622. Tant que l'expression d'activation n'a pas été détectée, le signal numérique correspondant à la requête de l'utilisateur n'est pas transmis à une sous unité de traitement 623, qui l'enregistre, le traite et le transmet à un convertisseur numérique-analogique 624. Le signal vocal reconstitué est ensuite diffusé par le haut-parleur interne 63 dans le volume intérieur 10 contenant l'enceinte intelligente.

Le réseau de microphones externes 61 permet au boîtier 100 de capter la voix de l'utilisateur quelle que soit sa direction dans un rayon déterminé, et comporte une pluralité de microphones dont le nombre est fonction de leur directivité. De préférence, le boîtier 100 comporte au moins trois microphones uniformément répartis de façon circonférentielle dans la base 30, les trois microphones sont omnidirectionnels et forment un triangle équilatéral de sorte à capter les sons environnants de manière avantageuse.

Le haut-parleur externe 73 est avantageusement constitué d'un tweeter (haut-parleur destiné à reproduire les fréquences sonores élevées, généralement les fréquences reproduites sont supérieures à 2000 Hz) et d'un woofer (haut-parleur ayant pour fonction de reproduire les basses fréquences, entre 20 et 500 Hz approximativement). Par exemple, le haut-parleur externe 73 est constitué d'un tweeter de 2.0 pouces et d'un woofer de 2.5 pouces accompagnés d'un port reflex, ce couplage permet au boîtier d'émettre un son de basse plus profond pour une expérience musicale ou sonore améliorée malgré ses dimensions réduites.

Les unités de traitement d'entrée 62 et de sortie 72 comprennent avantageusement des unités de traitement numérique de type DMP ou DSP (microprocesseur optimisé pour exécuter le plus rapidement possible des applications de traitement numérique du signal telles que le filtrage, l'extraction de signaux, etc.) telles que les unités DM 3725 ARM Cortex A8 processor commercialisées par la société Texas Instruments ; et des mémoires, une mémoire vive dynamique (DRAM) telle que la 250MB Samsung mobile DRAM, et une mémoire flash NAND.

## Revendications

1. Boîtier (100) **caractérisé en ce qu'**il comporte un volume intérieur (10) acoustiquement isolé, dans lequel une enceinte intelligente (200) à commande vocale peut être placée, et **en ce qu'**il comporte au moins un microphone externe (61) et un haut-parleur interne (63) combinés, et au moins un microphone interne (71) et un haut-parleur externe (73) combinés, lesdits microphone et haut-parleur externes étant situés à l'extérieur du volume intérieur et lesdits microphone et haut-parleur internes étant situés à l'intérieur du volume intérieur.

2. Boîtier selon la revendication 1, comportant en outre un couvercle (20) permettant l'accès au volume intérieur (10), ledit couvercle étant acoustiquement isolant.

3. Boîtier selon la revendication 1 ou la revendication 2, comportant une unité de traitement d'entrée (62) reliant le microphone externe (61) au haut-parleur interne (63) et implémentant un algorithme de détection de mots (622) de sorte que seules des commandes vocales captées par ledit microphone externe et précédées d'une expression d'activation déterminée sont transmises audit haut-parleur interne.

4. Boîtier selon l'une quelconque des revendications précédentes, comportant une unité de traitement de sortie (72) reliant le microphone interne (71) au haut-parleur externe (73) et permettant de réaliser un traitement numérique du signal.

5. Boîtier selon l'une quelconque des revendications précédentes, comportant une diode électroluminescente (50) qui change d'intensité lumineuse et ou de couleur en fonction de la détection de voix par le microphone externe (61).

6. Boîtier selon l'une quelconque des revendications précédentes, comportant une batterie électrique rechargeable (81) et un circuit de gestion de l'alimentation (82).

7. Boîtier selon l'une quelconque des revendications précédentes, comportant en outre une unité de traitement centralisée, une puce Bluetooth et une mémoire.

8. Boîtier selon l'une quelconque des revendications précédentes, comportant un bouton marche-arrêt (40) et des boutons de réglage du volume sonore (41) du haut-parleur externe (73).

9. Boîtier selon l'une quelconque des revendications précédentes, dans lequel le volume intérieur (10) est phoniquement isolé.

10. Boîtier selon l'une quelconque des revendications précédentes, présentant une forme globalement cylindrique à base circulaire et dans lequel le volume intérieur (10) est délimité par une paroi latérale (11) acoustiquement isolante et un fond (12) acoustiquement isolant.

11. Boîtier selon l'une quelconque des revendications précédentes, comportant un volume utile (13) contenu dans le volume intérieur (10) et dans lequel sont placés le microphone et le haut-parleur internes.

12. Boîtier selon l'une quelconque des revendications précédentes, comportant une base (30) dans laquelle sont placés le microphone et le haut-parleur externes.

13. Boîtier selon la revendication 12, dans lequel la base (30) comporte au moins une entrée microphone (31) et au moins une sortie haut-parleur (32).

14. Boîtier selon l'une quelconque des revendications précédentes, comportant un réseau de microphones externes (61), ledit réseau comprenant au moins trois microphones.

15. Boîtier selon l'une quelconque des revendications précédentes, comportant en outre un moyen de visualisation et de contrôle de type écran.
